# EUROPÄISCHE PATENTANMELDUNG

(11) **EP 3 088 103 A1**
(43) Veröffentlichungstag der Anmeldung: **02.11.2016**
(21) Anmeldenummer: 16020162.0
(22) Anmeldetag: 28.04.2016
(51) Int. Cl.: B22D 30/00, B22D 33/02, B65G 17/00

(54) **FÖRDERVORRICHTUNG, ANLAGE UND VERFAHREN ZUR NACHBEHANDLUNG EINES WERKSTÜCKS**

(30) Priorität: 29.04.2015 DE 102015005406
(71) Anmelder: Jöst GmbH + Co. KG, 48249 Dülmen (DE)
(72) Erfinder: HYPKI, Thomas, 48249 Dülmen (DE)
(74) Vertreter: Von Rohr Patentanwälte Partnerschaft mbB

(57) **Zusammenfassung**

Es werden Vorrichtungen und Verfahren zum Fördern eines Förderguts, insbesondere eines Werkstücks, mit mehreren voneinander trennbaren Förderelementen und einer Führungseinrichtung zum Führen bzw. Tragen der Förderelemente, sowie eine Anlage zum Nachbehandeln, insbesondere Kühlen, eines Werkstücks, insbesondere eines Gussstücks vorschlagen, wobei die Förderelemente in einem Obertrum der Fördervorrichtung einer Abgabestelle und in einem Untertrum der Fördervorrichtung einer Aufgabestelle zugeführt werden, wobei ein Förderelement der Förderelemente zum Wechsel vom Obertrum zum Untertrum oder umgekehrt bzw. angehoben wird und/oder sowohl der Obertrum als auch der Untertrum von einer Antriebseinrichtung angetrieben werden und/oder vom Werkstück gelöster Werkstoff aus dem Kanal mittels Abstreifer der Förderelemente gefördert wird.

## Beschreibung

Die vorliegende Erfindung betrifft eine Fördervorrichtung zum Fördern eines Förderguts, insbesondere eines Werkstücks, gemäß dem Oberbegriff des Anspruchs 1, eine Anlage zur Nachbehandlung, insbesondere Kühlen, eines Werkstücks, insbesondere eines Gussstücks, gemäß dem Oberbegriff des Anspruchs 8 sowie ein Verfahren zur Nachbehandlung, insbesondere Kühlen, eines Werkstücks, insbesondere eines Gussstücks, gemäß dem Oberbegriff des Anspruchs 11.

Unter dem Begriff "Fördergut" sind vorzugsweise alle Materialien bzw. Gegenstände zu verstehen, die mittels einer Fördervorrichtung bzw. Förderanlage förderbar bzw. transportierbar sind. Fördergüter können insbesondere lose Güter in schüttbarer Form bzw. Schüttgüter, wie Kohle, Erz, Getreide, Kies und/oder Schlamm, und/oder individualisierte bzw. stückweise handhabbare Güter bzw. Stückgüter, wie Kisten, Container, Paletten und/oder Werkstücke, insbesondere Gussstücke, sein.

Unter dem Begriff "Werkstück" ist vorzugsweise ein fester Körper zu verstehen, der insbesondere aus einem formlosen und/oder formneutralen Material durch Urformen hergestellt wird. Demnach sind Werkstücke insbesondere formgegossene Teile bzw. Gussstücke, die beispielsweise mittels Sandgussverfahren in Guss- bzw. Sandformen hergestellt werden.

Die vorliegende Erfindung betrifft vorzugsweise eine Fördervorrichtung und/oder eine Anlage zum Fördern bzw. zur Nachbehandlung eines Gussstücks. Die vorliegende Erfindung kann jedoch auch zum Fördern bzw. Nachbehandeln eines anderen Werkstücks bzw. Förderguts eingesetzt werden.

Die DE 25 36 057 A1 offenbart eine Gießbandvorrichtung mit einem langgestreckten, umlaufenden Förderer, mit dem Kokillen zwischen einer Gießstelle und einer Entleerungsstelle transportierbar sind, wobei ein die Kokillen tragender Obertrum wenigstens auf einer Teillänge von einem Luftführungskanal umgeben ist und wobei eine Einrichtung zur Erzeugung eines Luftstroms in dem Kanal vorgesehen ist. Eine derartige Konstruktionsweise ist jedoch aufwendig, wartungs- und kostenintensiv und weist einen großen Platzbedarf auf.

Insbesondere vor diesem Hintergrund liegt der vorliegenden Erfindung die Aufgabe zugrunde, eine verbesserte Fördervorrichtung zum Fördern eines Förderguts, eine verbesserte Anlage sowie ein verbessertes Verfahren zur Nachbehandlung eines Werkstücks anzugeben, vorzugsweise wobei ein zuverlässiges, sicheres, effizientes und/oder kostengünstiges Fördern bzw. Nachbehandeln eines Förderguts bzw. eines Werkstücks und/oder eine stabile, kompakte, kostengünstige, sichere und/oder wartungsarme Bau- bzw. Konstruktionsweise ermöglicht oder unterstützt wird bzw. werden.

Die obige Aufgabe wird durch eine Fördervorrichtung gemäß Anspruch 1, eine Anlage gemäß Anspruch 8 oder ein Verfahren gemäß Anspruch 11 gelöst. Vorteilhafte Weiterbildungen sind Gegenstand der Unteransprüche.

Die vorschlagsgemäße Fördervorrichtung ist insbesondere zum Transport bzw. Fördern eines Förderguts, insbesondere eines Werkstücks, wie eines Gussstücks, ausgebildet. Die Fördervorrichtung weist vorzugsweise mehrere voneinander trennbare, vorzugsweise plattenartige, Förderelemente bzw. -segmente und eine Führungseinrichtung, insbesondere ein Schienensystem, zum Führen bzw. Tragen der Förderelemente auf. Die Führungseinrichtung der Fördereinrichtung weist vorzugsweise einen Obertrum zur Zuführung der Förderelemente bzw. des Förderguts zu einer Abgabestelle und einen Untertrum zur Rückförderung der Förderelemente zu einer Aufgabestelle auf.

Die Fördervorrichtung ist vorzugsweise als Unstetigförderer oder Stetigförderer ausgebildet. Vorzugsweise ist das Fördergut bzw. das Werkstück mittels der Fördervorrichtung pulsierend, schrittweise, schubweise bzw. taktweise förderbar bzw. transportierbar und/oder wird das Fördergut bzw. das Werkstück mittels der Fördervorrichtung pulsierend, schrittweise, schubweise bzw. taktweise gefördert bzw. transportiert. Es ist jedoch auch möglich, dass die Fördervorrichtung das Fördergut bzw. das Werkstück mit konstanter Fördergeschwindigkeit, ununterbrochen bzw. fließend fördert bzw. transportiert.

Vorzugsweise ist die Fördervorrichtung als flurgebundener Förderer ausgebildet. Besonders bevorzugt ist die Fördervorrichtung als Plattenbandförderer ausgebildet, insbesondere wobei die Platten bzw. Förderelemente voneinander trennbar bzw. lose miteinander verbunden sind und/oder im Bewegungsablauf der Fördervorrichtung - zumindest temporär - getrennt werden. Ganz besonders bevorzugt weist die Fördervorrichtung kein Zugmittel auf bzw. ist die Fördervorrichtung zugmittelfrei ausgebildet.

Unter dem Begriff "Obertrum" ist vorzugsweise derjenige Teil der Fördervorrichtung zu verstehen, der eine Zuförderung der Förderelemente bzw. des Förderguts - insbesondere von einer Aufgabestelle zu einer Abgabestelle bzw. in eine Förderrichtung - bewirkt. Vorzugsweise weist der Obertrum mehrere Förderelemente auf und/oder werden mehrere Förderelemente und/oder das Fördergut bzw. Werkstück im Obertrum in Förderrichtung gefördert.

Unter dem Begriff "Untertrum" ist vorzugsweise derjenige Teil der Fördervorrichtung zu verstehen, der eine Rückförderung der - insbesondere vom Obertrum der Abgabestelle zugeförderten - Förderelemente - insbesondere von der Abgabestelle zu der Aufgabestelle bzw. in eine Rückförderrichtung - bewirkt und/oder der dazu ausgebildet, die - insbesondere vom Obertrum der Abgabestelle zugeförderten - Förderelemente der Aufgabestelle zuzufördern.

Vorzugsweise weisen sowohl der Obertrum als auch der Untertrum kein Zugmittel auf bzw. sind der Obertrum und der Untertrum zugmittelfrei ausgebildet. Insbesondere werden der Obertrum und der Untertrum durch die Führungseinrichtung und die Förderelemente gebildet.

Vorzugsweise bilden der Obertrum und der Untertrum einen Kreislauf bzw. ist die Fördervorrichtung, insbesondere der Bewegungsablauf der Fördervorrichtung, als Kreislauf ausgebildet.

Gemäß einem ersten, auch unabhängig realisierbaren Aspekt der vorliegenden Erfindung ist die Fördervorrichtung bzw. die Führungseinrichtung der Fördervorrichtung zum Wechsel eines oder mehrerer Förderelemente vom Obertrum zum Untertrum bzw. vom Untertrum zum Obertrum - insbesondere endseitig bzw. an einem oder beiden axialen Enden der Fördervorrichtung - absenkbar bzw. anhebbar, insbesondere neigbar bzw. kippbar.

Besonders bevorzugt weist die Fördervorrichtung bzw. die Führungseinrichtung - insbesondere endseitig bzw. an einem oder beiden axialen Enden der Fördervorrichtung jeweils - mindestens ein absenkbares bzw. anhebbares Führungselement auf, vorzugsweise wobei das Führungselement dazu ausgebildet ist, ein oder mehrere Förderelemente dem Untertrum bzw. dem Obertrum zuzuführen. Auf diese Weise wird eine besonders kompakte, stabile und/oder wartungsarme Konstruktionsweise der Fördervorrichtung ermöglicht. Insbesondere ist es mittels der vorschlagsgemäßen Fördervorrichtung nicht notwendig, eine Umlenktrommel o. dgl. zum Wechsel eines Förderelements vom Obertrum zum Untertrum bzw. umgekehrt einzusetzen.

Gemäß einem weiteren, auch unabhängig realisierbaren Aspekt der vorliegenden Erfindung weist die Fördervorrichtung eine Antriebseinrichtung auf, die die Förderelemente sowohl im Obertrum als auch im Untertrum bzw. sowohl in Förderrichtung als auch in Rückförderrichtung bzw. sowohl von der Aufgabestelle zu der Abgabestelle als auch von der Abgabestelle zu der Aufgabestelle antreibt, insbesondere drückt bzw. schiebt und/oder zieht, vorzugsweise wobei die Antriebseinrichtung an einem (axialen) Ende der Fördervorrichtung angeordnet ist. In vorteilhafter Weise ermöglicht dies, mittels einer einzigen Antriebseinrichtung den gesamten Bewegungsablauf der Fördervorrichtung durchzuführen und/oder zu steuern, auch wenn der Obertrum bzw. die Förderelemente im Obertrum vom Untertrum bzw. den Förderelementen im Untertrum mechanisch bzw. antriebstechnisch entkoppelt ist bzw. sind. Dies ist einer besonders einfachen, kostengünstigen und/oder kompakten Bauweise der Fördervorrichtung zuträglich.

Gemäß einem weiteren, auch unabhängig realisierbaren Aspekt der vorliegenden Erfindung weisen einige oder alle Förderelemente der Fördervorrichtung jeweils einen Abstreifer zum Abstreifen von vom Fördergut bzw. Werkstück gelösten Werkstoff auf, vorzugsweise wobei die Abstreifer jeweils auf einer Unterseite der Förderelemente angeordnet sind. Auf diese Weise wird eine besonders wartungsarme Bauweise der Fördervorrichtung ermöglicht oder unterstützt. Insbesondere werden etwaige Partikel bzw. wird der vom Fördergut bzw. Werkstück gelöste Werkstoff selbsttätig bzw. durch den Bewegungsablauf der Fördervorrichtung aus der Fördervorrichtung entfernt. Die notwendigen Stillstandzeiten zur Reinigung der Fördervorrichtung können auf diese Weise reduziert werden.

Die vorschlagsgemäße Anlage zur Nachbehandlung, insbesondere Kühlen, eines Werkstückes, insbesondere eines Gussstücks, weist einen Kanal, insbesondere einen Kühlkanal, und eine vorschlagsgemäße Fördereinrichtung zum Fördern des Werkstückes, auf, vorzugsweise wobei die Fördervorrichtung zumindest teilweise im Kanal angeordnet ist bzw. durch den Kanal verläuft. Die kompakte Bauweise der Fördervorrichtung ermöglicht auch eine kompakte Bauweise des Kanals, insbesondere wodurch eine kostengünstige, effiziente und/oder schnelle Nachbehandlung des Werkstücks ermöglicht oder unterstützt wird. Etwaige Partikel bzw. der vom Fördergut bzw. Werkstück gelöste Werkstoff ist mittels der Fördervorrichtung, insbesondere der Förderelemente, aus dem Kanal förderbar. Insbesondere wird der Kanal mittels der Fördervorrichtung, insbesondere der Förderelemente, gereinigt.

Unter dem Begriff "Nachbehandlung" sind bei der vorliegenden Erfindung vorzugsweise alle technischen Maßnahmen zu verstehen, die die Eigenschaften eines Werkstücks, insbesondere eines Gussstücks, in gewünschter Weise beeinflussen. Vorzugsweise umfasst die Nachbehandlung thermische, mechanische und/oder chemische Behandlungen des Werkstücks. Besonders bevorzugt ist bzw. umfasst die Nachbehandlung im Sinne der vorliegenden Erfindung eine Wärmebehandlung des Werkstücks. Insbesondere umfasst die Nachbehandlung das Kühlen des Werkstücks bzw. die Wärmeabfuhr vom Werkstück. Der Begriff "Nachbehandlung" ist jedoch breit zu verstehen bzw. auszulegen. Insbesondere kann die Nachbehandlung auch die Oberflächenbehandlung, Reinigung und/oder Beschichtung des Werkstücks umfassen. Beispielsweise kann die vorschlagsgemäße Anlage zum Härten, Anlassen, Glühen, Vergüten, Nitrieren, Aluminieren, Silicieren, Borieren, Chromieren, Verzinken, Waschen, Beizen, Strahlen, Lackieren, Pulverbeschichten, Emaillieren o. dgl. des Werkstücks verwendet werden.

Das vorschlagsgemäße Verfahren zur Nachbehandlung, insbesondere Kühlen, eines Werkstücks, insbesondere eines Gussstücks, sieht vor, das Werkstück mittels einer Fördervorrichtung durch einen Kanal, insbesondere einen Kühlkanal, zur Nachbehandlung des Werkstücks zu fördern bzw. zu transportieren, vorzugsweise wobei die Fördervorrichtung mehrere voneinander trennbare, vorzugsweise plattenartige, Förderelemente aufweist und wobei die Förderelemente in einem Obertrum der Fördervorrichtung einer Abgabestelle und in einem Untertrum der Fördervorrichtung einer Aufgabestelle zugeführt werden.

Gemäß einem ersten, auch unabhängig realisieren Aspekt des vorschlagsgemäßen Verfahrens wird ein Förderelement bzw. werden mehrere Förderelemente zum Wechsel des bzw. der Förderelemente vom Obertrum zum Untertrum oder umgekehrt - vorzugsweise mittels einer Hub-Senk-Einrichtung - abgesenkt bzw. angehoben und/oder geneigt bzw. gekippt. Auf diese Weise können entsprechende Vorteile realisiert werden.

Gemäß einem weiteren, auch unabhängig realisierbaren Aspekt des vorschlagsgemäßen Verfahrens werden sowohl der Obertrum bzw. die Förderelemente im Obertrum als auch der Untertrum bzw. die Förderelemente im Untertrum - vorzugsweise unmittelbar bzw. direkt und/oder schubweise - angetrieben, insbesondere durch den Kanal gedrückt bzw. geschoben oder gezogen. Auf diese Weise können entsprechende Vorteile realisiert werden. Insbesondere ermöglicht ein derartiges Verfahren einen besonders effizienten, einfachen, sicheren und/oder wartungsarmen Transport des Werkstücks durch den Kanal.

Gemäß einem weiteren, auch unabhängig realisierbaren Aspekt des vorschlagsgemäßen Verfahrens wird vom Werkstück gelöster bzw. sich lösender Werkstoff, insbesondere Formstoff, aus dem Kanal, insbesondere vom Kanalboden des Kanals, mittels Abstreifer der Förderelemente gefördert bzw. gekehrt. Auf diese Weise können entsprechende Vorteile realisiert werden.

Zusätzliche Vorteile, Merkmale, Eigenschaften und Aspekte der vorliegenden Erfindung ergeben sich aus den Ansprüchen und der folgenden Beschreibung einer bevorzugten Ausführungsform anhand der Zeichnung. Es zeigt:

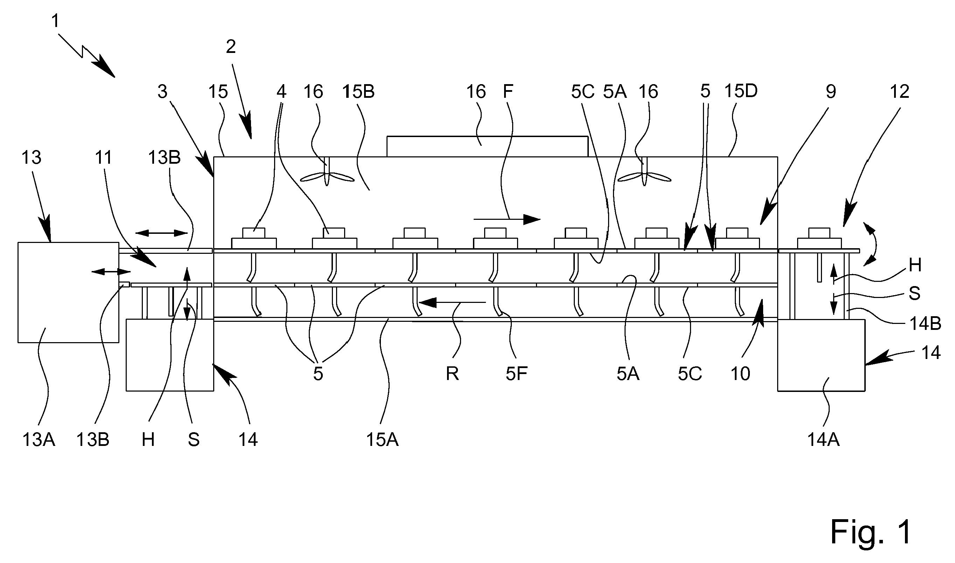

- Fig. 1: eine schematische Seitenansicht einer vorschlagsgemäßen Anlage mit einer vorschlagsgemäßen Fördervorrichtung und einem Kanal;
- Fig. 2: eine perspektivische Ansicht der Anlage gemäß Fig. 1 ohne dargestellte Antriebseinrichtung;
- Fig. 3: eine perspektivische Ansicht der Anlage gemäß Fig. 2 nachdem ein Obertrum der Fördervorrichtung angetrieben worden ist;
- Fig. 4: eine perspektivische Ansicht der Anlage gemäß Fig. 2 beim Wechseln eines Förderelements der Fördervorrichtung vom Obertrum zu einem Untertrum der Fördervorrichtung;
- Fig. 5: eine perspektivische Ansicht der Anlage gemäß Fig. 2 unmittelbar bevor der Untertrum angetrieben wird; und
- Fig. 6: eine perspektivische Ansicht der Anlage gemäß Fig. 2 nachdem der Untertrum angetrieben worden ist.

In den teilweise nicht maßstabsgerechten, nur schematischen Figuren werden für gleiche oder ähnliche Teile dieselben Bezugszeichen verwendet, wobei entsprechende oder vergleichbare Eigenschaften und Vorteile erreicht werden, auch wenn eine wiederholte Beschreibung weggelassen ist.

Eine vorschlagsgemäße Anlage 1 weist vorzugsweise einen Kanal 2, insbesondere einen Kühlkanal, und eine Fördervorrichtung 3 auf.

Die Anlage 1 bzw. die Fördervorrichtung 3 ist vorzugsweise dazu ausgebildet, ein Fördergut bzw. ein Werkstück 4 zu fördern und/oder nachzubehandeln, insbesondere zu kühlen.

Die Anlage 1 bzw. die Fördervorrichtung 3 ist besonders bevorzugt eine Produktionsanlage oder ein Teil einer Produktionsanlage, insbesondere einer Gießereianlage. Vorzugsweise ist die Anlage 1 bzw. die Fördervorrichtung 3 mit anderen Fördervorrichtungen 3 verbindbar bzw. koppelbar und/oder in eine Produktionsanlage, insbesondere eine Fertigungsstraße, vorzugsweise einer Gießereianlage, integrierbar.

Die Anlage 1 bzw. die Fördervorrichtung 3 weist vorzugsweise mehrere Förderelemente 5 auf. Die Förderelemente 5 sind vorzugsweise dazu ausgebildet, das Fördergut bzw. Werkstück 4 aufzunehmen und/oder eine Aufnahme für das Fördergut bzw. Werkstück 4 zu bilden. Besonders bevorzugt weisen die Förderelemente 5 - zumindest temporär - eine gemeinsame Förderfläche auf und/oder bilden die Förderelemente 5 - zumindest temporär - eine gemeinsame Förderfläche, eine Förderrinne bzw. ein Förderband.

Die Förderelemente 5 sind vorzugsweise als Platten bzw. plattenartig ausgebildet. Vorzugsweise sind die Förderelemente 5 voneinander trennbar bzw. entkoppelbar. Insbesondere sind die Förderelemente 5 lose miteinander verbunden. Es ist jedoch möglich, dass die Förderelemente 5 - zumindest temporär - formschlüssig miteinander verbunden oder verbindbar sind.

Die Anlage 1 bzw. die Fördervorrichtung 3 weist vorzugsweise eine Führungseinrichtung 6 auf, vorzugsweise wobei die Führungseinrichtung 6 zum Führen bzw. Tragen der Förderelemente 5 ausgebildet ist, insbesondere auf mehreren, vorzugsweise zwei, Ebenen.

Die Führungseinrichtung 6 weist vorzugsweise mehrere, insbesondere vier, Führungsschienen 7 auf und/oder ist vorzugsweise durch mehrere, insbesondere vier, Führungsschienen 7 gebildet. Besonders bevorzugt ist die Führungseinrichtung 6 als Schienensystem ausgebildet.

Vorzugsweise bilden zwei zumindest im Wesentlichen parallel zueinander und/oder horizontal nebeneinander angeordnete Führungsschienen 7 eine Führungsbahn für mehrere Förderelemente 5 und/oder sind mehrere Förderelemente 5 in bzw. auf zwei zumindest im Wesentlichen parallel zueinander und/oder horizontal nebeneinander angeordneten Führungsschienen 7 geführt.

Vorzugsweise sind mehrere, insbesondere zwei, Führungsschienen 7 - zumindest im Wesentlichen unmittelbar - übereinander bzw. in unterschiedlichen Höhen/Ebenen zueinander angeordnet.

Insbesondere bilden die Führungsschienen 7 mindestens zwei übereinander angeordnete und/oder vertikal zueinander beabstandete Führungsbahnen, vorzugsweise eine untere und eine obere Führungsbahn.

Vorzugsweise weist die Führungseinrichtung 6 mindestens ein, vorzugsweise mehrere, insbesondere vier, Führungselemente 8 auf, vorzugsweise wobei die Führungselemente 8 als Verlängerung der Führungsschienen 7 bzw. der Führungsbahnen ausgebildet sind.

Die Führungselemente 8 sind vorzugsweise am (axialen) Anfang und/oder am (axialen) Ende der Anlage 1, Fördervorrichtung 3 und/oder Führungsschiene 7 angeordnet.

Vorzugsweise sind die Führungselemente 8 - zumindest vertikal - bewegbar bzw. höhenverstellbar. Optional sind die Führungselemente 8 zusätzlich horizontal bewegbar. Besonders bevorzugt sind die Führungselemente 8 - insbesondere relativ zu den Führungsschienen 7 - absenkbar und/oder anhebbar bzw. kippbar und/oder neigbar, wie im Folgenden noch genauer beschrieben wird.

Vorzugsweise weist die Anlage 1, die Fördervorrichtung 3 bzw. die Führungseinrichtung 6 einen Obertrum 9 und einen Untertrum 10 auf.

Besonders bevorzugt bilden die oberen Führungsschienen 7 mit mehreren Förderelementen 5 den Obertrum 9 und/oder die unteren Führungsschienen 7 mit mehreren Förderelementen 5 den Untertrum 10 bzw. weisen der Obertrum 9 und der Untertrum 10 jeweils zwei Führungsschienen 7 auf.

Vorzugsweise ist der Obertrum 9 - insbesondere unmittelbar - oberhalb des Untertrums 10 und/oder vertikal beabstandet zum Untertrum 10 angeordnet.

Die Anlage 1 bzw. die Fördervorrichtung 3, insbesondere der Obertrum 9, ist vorzugsweise dazu ausgebildet, das Fördergut bzw. Werkstück 4, insbesondere auf den Förderelementen 5 bzw. mittels der Förderelemente 5, zu fördern bzw. zu transportieren, insbesondere in eine Förderrichtung F bzw. von einer Aufgabestelle 11 zu einer Abgabestelle 12 der Anlage 1 bzw. Fördervorrichtung 3.

Die Förderrichtung F ist vorzugsweise diejenige Richtung, in die das Fördergut bzw. Werkstück 4 förderbar ist bzw. gefördert wird und/oder in die die (beladenen) Förderelemente 5 des Obertrums 9 bewegt bzw. angetrieben werden, insbesondere von der Aufgabestelle 11 zur Abgabestelle 12 bzw. vom ersten (axialen) Ende der Fördervorrichtung 3 zum zweiten (axialen) Ende der Fördervorrichtung 3. Vorzugsweise entspricht die Förderrichtung F der Bewegungsrichtung des Obertrums 9 bzw. der Förderelemente 5 im Obertrum 9.

Zusätzlich ist die Anlage 1 bzw. die Fördervorrichtung 3, insbesondere der Untertrum 10, vorzugsweise dazu ausgebildet, die Förderelemente 5 in einer Rückförderrichtung R bzw. von der Abgabestelle 12 zu der Aufgabestelle 11 zu fördern bzw. transportieren. Insbesondere ist die Anlage 1 bzw. die Fördervorrichtung 3, insbesondere der Untertrum 10, dazu ausgebildet, nach Abgabe bzw. Abwurf des Förderguts bzw. Werkstücks 4 die Förderelemente 5 für die Aufgabe weiterer Werkstücke 4 bzw. für die erneute Aufnahme von Fördergut bereitzustellen, vorzugsweise an der Aufgabestelle 11.

Die Rückförderrichtung R ist vorzugsweise diejenige Richtung, in die die (entladenen) Förderelemente 5 im Untertrum 10 bewegt bzw. angetrieben werden, insbesondere von der Abgabestelle 12 zur Aufgabestelle 11 bzw. vom zweiten (axialen) Ende der Fördervorrichtung 3 zum ersten (axialen) Ende der Fördervorrichtung 3. Die Rückförderrichtung R entspricht vorzugsweise der Bewegungsrichtung des Untertrums 10 bzw. der Förderelemente 5 im Untertrum 10. Vorzugsweise ist die Rückförderrichtung R der Förderrichtung F zumindest im Wesentlichen entgegengerichtet.

Die Aufgabestelle 11 ist vorzugsweise zur Aufgabe bzw. Aufnahme von Fördergut bzw. Werkstücken 4 ausgebildet. Insbesondere ist die Anlage 1 bzw. Fördervorrichtung 3 an der Aufgabestelle 11 beschickbar.

Die Abgabestelle 12 ist vorzugsweise zur Abgabe bzw. Bereitstellung des (geförderten) Förderguts bzw. der (geförderten) Werkstücke 4 ausgebildet. Bei der dargestellten Ausführungsform sind die Aufgabestelle 11 am ersten Ende und die Abgabestelle 12 am zweiten Ende der Anlage 1 bzw. Fördervorrichtung 3 angeordnet. Es ist jedoch auch möglich, die Aufgabestelle 11 bzw. die Abgabestelle 12 an einer beliebigen Stelle der Anlage 1 bzw. der Fördervorrichtung 3 vorzusehen bzw. die Anlage 1 bzw. Fördervorrichtung 3 an einer beliebigen Stelle zu beladen und/oder zu entladen.

Besonders bevorzugt weist der Obertrum 9 die Aufgabestelle 11 und/oder die Abgabestelle 12 auf und/oder bildet der Obertrum 9 die Aufgabestelle 11 und/oder die Abgabestelle 12. Es ist jedoch auch möglich, dass die Aufgabestelle 11 und/oder die Abgabestelle 12 durch eine separate Einrichtung gebildet sind/ist.

Die Anlage 1 bzw. die Fördervorrichtung 3 weist vorzugsweise eine Antriebseinrichtung 13 zum Antrieb der Fördervorrichtung 3 und/oder eine Hub-Senk-Einrichtung 14 zum Wechsel eines Förderelements 5 bzw. mehrerer Förderelemente 5 vom Obertrum 9 zum Untertrum 10 oder umgekehrt auf.

Vorzugsweise ist die Antriebseinrichtung 13 dazu ausgebildet, die Förderelemente 5 - insbesondere direkt bzw. unmittelbar und/oder schubweise - anzutreiben, insbesondere durch den Kanal 2 zu schieben und/oder zu ziehen.

Die Hub-Senk-Einrichtung 14 ist vorzugsweise dazu ausgebildet, die Fördereinrichtung 3 bzw. die Führungseinrichtung 6, insbesondere die Führungselemente 8, zum Wechsel eines Förderelements 5 vom Obertrum 9 zum Untertrum 10 bzw. vom Untertrum 10 zum Obertrum 9 anzuheben bzw. abzusenken.

Im Folgenden wird zunächst die vorschlagsgemäße Anlage 1 und die vorschlagsgemäße Fördervorrichtung 3 und anschließend das vorschlagsgemäße Verfahren zur Nachbehandlung des Werkstücks 4 mittels der Anlage 1 bzw. der Fördervorrichtung 3 im Detail beschrieben.

Der Kanal 2 ist insbesondere dazu ausgebildet, Fördergut bzw. das Werkstück 4 von der Umgebung räumlich zu trennen und/oder - zumindest temporär - einzuschließen. Der Kanal 2 weist vorzugsweise eine Kanalwandung 15 auf bzw. ist vorzugsweise durch eine Kanalwandung 15 gebildet.

Bei der dargestellten Ausführungsform weist der Kanal 2 bzw. die Kanalwandung 15 einen zumindest im Wesentlichen rechteckigen oder quadratischen Querschnitt auf. Es sind jedoch auch andere konstruktive Lösungen möglich, insbesondere bei denen der Querschnitt des Kanals 2 bzw. der Kanalwandung 15 zumindest im Wesentlichen kreisförmig oder oval ausgebildet ist.

Vorzugsweise ist der Kanal 2 bzw. die Kanalwandung 15 radial bzw. seitlich geschlossen. Optional sind auch die axialen Enden des Kanals 2 verschließbar ausgebildet, vorzugsweise derart, dass der durch den Kanal 2 bzw. die Kanalwandung 15 umschlossene Raum zumindest im Wesentlichen vollständig von der Umgebung getrennt ist. Bei der dargestellten Ausführungsform ist der Kanal 2 axial offen bzw. an den beiden axialen Enden geöffnet.

Der Kanal 2 bzw. die Kanalwandung 15 weist vorzugsweise einen Kanalboden 15A, eine erste Kanalseite 15B, eine zweite Kanalseite 15C und eine Kanaldecke 15D auf und/oder ist durch einen Kanalboden 15A, eine erste Kanalseite 15B, eine zweite Kanalseite 15C und eine Kanaldecke 15 gebildet.

Vorzugsweise sind/ist der Kanalboden 15A, die erste Kanalseite 15B, die zweite Kanalseite 15C und/oder die Kanaldecke 15D - beispielsweise zur Instandhaltung der Anlage 1, des Kanals 2 und/oder der Fördervorrichtung 3 - abnehmbar. Insbesondere ist der Kanal 2 bzw. die Kanalwandung 15 öffenbar, vorzugsweise durch Abnehmen der Kanaldecke 15D .

Die Anlage 1 bzw. der Kanal 2 ist vorzugsweise dazu ausgebildet, das Fördergut bzw. das Werkstück 4 nachzubehandeln, insbesondere zu kühlen bzw. dem Fördergut bzw. Werkstück 4 Wärme zu entziehen. Wie bereits eingangs angeführt, kann die Anlage 1, der Kanal 2 bzw. die Fördervorrichtung 3 auch anderweitig, insbesondere für die Wärmebehandlung, Oberflächenbehandlung, Beschichtung und/oder Reinigung des Förderguts bzw. Werkstücks 4, verwendet werden.

Besonders bevorzugt ist die Anlage 1 bzw. der Kanal 2 dazu ausgebildet, warme oder heiße Gussstücke nachzubehandeln, insbesondere zu kühlen, vorzugsweise während des Transports im bzw. durch den Kanal 2 mittels der Fördervorrichtung 3. Insbesondere ist die Anlage 1 bzw. der Kanal 2 als Wärmeübertrager ausgebildet und/oder weist die Anlage 1 bzw. der Kanal 2 einen Wärmeübertrager auf.

Vorzugsweise weist die Anlage 1 bzw. der Kanal 2 eine oder mehrere Belüftungseinrichtungen 16, wie Ventilatoren bzw. Gebläse, auf, vorzugsweise wobei die Belüftungseinrichtungen 16 im oder am Kanal 2, insbesondere der Kanaldecke 15D, angeordnet bzw. befestigt sind. Besonders bevorzugt ist die Wärme des Förderguts bzw. Werkstücks 4 mittels des Kanals 2 bzw. der Belüftungseinrichtung 16 abtransportierbar, vorzugsweise durch (erzwungene) Konvektion.

Besonders bevorzugt ist die Belüftungseinrichtung 16 als Deckenbelüftung ausgebildet bzw. an der Kanaldecke 15D befestigt. Es sind jedoch auch konstruktive Lösungen möglich, bei denen die Belüftungseinrichtung 16 - zusätzlich oder alternativ - als Quer-, Boden- und/oder Quelllüftung ausgebildet ist.

Vorzugsweise ist mittels der Anlage 1 bzw. dem Kanal 2, insbesondere der Belüftungseinrichtung 16, ein Luftstrom bzw. Kühlluftstrom im Kanal 2 erzeugbar. Vorzugsweise weist der erzeugte Luftstrom Turbulenzen auf bzw. ist der erzeugte Luftstrom turbulent. Es ist jedoch auch möglich, dass der mittels der Belüftungseinrichtung 16 erzeugte Luftstrom zumindest im Wesentlichen laminar ausgebildet ist. Bei einer besonders bevorzugten Ausführungsform ist der Luftstrom der Förderrichtung F zumindest im Wesentlichen entgegengerichtet. Auf diese Weise wird eine besonders effiziente Wärmeabführung bzw. Kühlung des Förderguts bzw. Werkstücks 4 ermöglicht oder unterstützt.

Die Fördervorrichtung 3 ist vorzugsweise zumindest teilweise im Kanal 2 angeordnet bzw. erstreckt sich zumindest teilweise durch den Kanal 2. Insbesondere weist die Fördervorrichtung 3 einen Abschnitt zur Nachbehandlung, insbesondere Kühlen, des Förderguts bzw. Werkstücks 4 auf, vorzugsweise wobei der Abschnitt im Kanal 2 angeordnet ist.

Bei der dargestellten Ausführungsform ist die Fördervorrichtung 3 zumindest im Wesentlichen über die gesamte Länge im Kanal 2 angeordnet bzw. erstreckt sich der Kanal 2 zumindest im Wesentlichen über die gesamte Länge der Fördervorrichtung 3. Es ist jedoch auch möglich, dass die Fördervorrichtung 3 länger als der Kanal 2 ausgebildet ist.

Vorzugsweise erstreckt sich die Fördervorrichtung 3 nur partiell über die Höhe des Kanals 2. Vorzugsweise beträgt die Höhe der Fördervorrichtung 3 weniger als 50 %, besonders bevorzugt weniger als 30 % oder 20 %, insbesondere weniger als 10 %, der Höhe des Kanals 2. Auf diese Weise wird eine optimierte Raumausnutzung des Kanals 2 gewährleistet bzw. auch der Transport großer, insbesondere hoher, Werkstücke 4 durch den Kanal 2 ermöglicht.

Die Fördervorrichtung 3, insbesondere die Führungseinrichtung 6 bzw. die Führungsschienen 7, ist bzw. sind vorzugsweise form-, kraft- und/oder stoffschlüssig mit der Kanalwandung 15, insbesondere dem Kanalboden 15A, der ersten Kanalseite 15B und/oder der zweiten Kanalseite 15C, verbunden oder verbindbar. Es ist jedoch auch möglich, dass die Fördervorrichtung 3, insbesondere die Führungseinrichtung 6 bzw. die Führungsschienen 7, lose mit der Kanalwandung 15, verbunden, insbesondere in den Kanal 2 eingeschoben, ist bzw. sind.

Die Führungseinrichtung 6 ist vorzugsweise als Schienensystem ausgebildet. Besonders bevorzugt sind bzw. werden die Förderelemente 5 seitlich von der Führungseinrichtung 6, insbesondere den Führungsschienen 7, geführt. Zusätzlich ist die Führungseinrichtung 6 dazu ausgebildet, die Förderelemente 5 zu tragen bzw. bodenseitig zu stützen. Insbesondere ist die Führungseinrichtung 6 als Tragwerk für die Förderelemente 5 ausgebildet.

Die Führungsschienen 7 und/oder die Führungselemente 8 sind vorzugsweise jeweils länglich und/oder als offenes Profil ausgebildet. Insbesondere sind die Führungsschienen 7 und/oder die Führungselemente 8 zumindest im Wesentlichen als C-förmiges Profil ausgebildet und/oder weisen die Führungsschienen 7 und/oder die Führungselemente 8 ein zumindest im Wesentlichen C-förmigen Querschnitt auf, vorzugsweise wobei die Förderelemente 5 seitlich in den Führungsschienen 7 und/oder den Führungselementen 8 geführt sind bzw. werden.

Die Führungselemente 8 weisen jeweils zumindest im Wesentlichen die gleiche Länge bzw. Längserstreckung in Förderrichtung F wie ein Förderelement 5 auf. Vorzugsweise ist jeweils ein Förderelement 5 auf bzw. in dem Führungselement 8 führbar bzw. tragbar und/oder mittels des Führungselements 8 vom Obertrum 9 zum Untertrum 10 oder umgekehrt wechselbar. Es sind jedoch auch konstruktive Lösungen möglich, bei denen mehrere Förderelemente 5 (gleichzeitig) mittels eines Führungselements 8 geführt sind/werden und/oder vom Obertrum 9 zum Untertrum 10 oder umgekehrt transportiert werden.

Wie bereits eingangs erläutert, sind die Förderelemente 5 vorzugsweise als Platten bzw. plattenartig ausgebildet. Vorzugsweise bilden die Förderelemente 5 - zumindest im Obertrum 9 - eine gemeinsame Förderfläche bzw. Förderrinne für das Fördergut bzw. Werkstück 4.

Vorzugsweise sind die Förderelemente 5, insbesondere eine Oberseite 5A der Förderelemente 5, zur Aufnahme des Förderguts bzw. des Werkstücks 4 ausgebildet. Optional sind bzw. ist die Förderelemente 5, insbesondere die Oberseite 5A der Förderelemente 5, profiliert bzw. weisen bzw. weist die Förderelemente 5, insbesondere die Oberseite 5A der Förderelemente 5, Erhöhungen und/oder Vertiefungen auf. Eine derartige Konstruktionsweise verhindert ein mögliches Kippen oder Verrutschen des Förderguts bzw. Werkstücks 4 während des Transports.

Bei einer besonders bevorzugten Ausführungsform (nicht dargestellt) sind die Förderelemente 5 bzw. ist die Oberseite 5A der Förderelemente 5 an das aufzunehmende bzw. zu befördernde Fördergut bzw. Werkstück 4 angepasst. Beispielsweise können die Förderelemente 5 bzw. kann die Oberseite 5A der Förderelemente 5 dem Fördergut bzw. Werkstück 4, insbesondere der Kontur des Werkstücks 4, angepasst sein und/oder insbesondere zur Kontur des Werkstücks 4 komplementäre Vertiefungen aufweisen, vorzugsweise wobei das Fördergut bzw. das Werkstück 4 in die Vertiefungen der Förderelemente 5 einsetzbar ist.

Wie bereits eingangs erläutert, sind die Förderelemente 5 voneinander trennbar bzw. lose miteinander verbunden. Besonders bevorzugt sind die Förderelemente 5 austauschbar bzw. auswechselbar. Insbesondere ist es möglich, in Abhängigkeit vom Fördergut bzw. Werkstück 4 die Förderelemente 5 auszutauschen bzw. auszuwechseln. Auf diese Weise kann die Anlage 1 bzw. Fördervorrichtung 3 an das jeweilige Fördergut bzw. Werkstück 4 schnell und einfach angepasst werden.

Die Förderelemente 5 weisen vorzugsweise jeweils mehrere, vorzugsweise vier, Laufräder 5B auf, vorzugsweise wobei die Laufräder 5B in der Führungseinrichtung 6, insbesondere den Führungsschienen 7 und/oder den Führungselementen 8, aufgenommen bzw. geführt werden.

Die Laufräder 5B der Förderelemente 5 sind vorzugsweise an bzw. mit einer Unterseite 5C der Förderelemente 5 verbunden bzw. befestigt.

Vorzugsweise überdeckt die Oberseite 5A bzw. die durch die Förderelemente 5 gebildete Förderfläche die Laufräder 5B, insbesondere derart, dass die Laufräder 5B vor Verunreinigungen, insbesondere vor vom Fördergut bzw. Werkstück 4 gelösten Werkstoff, geschützt sind.

Es sind insbesondere auch konstruktive Lösungen möglich, bei denen die Führungseinrichtung 6, insbesondere die Führungsschiene 7 und/oder die Führungselemente 8, die Laufräder 5B aufweist bzw. aufweisen, vorzugsweise so dass die Förderelemente 5 rollend mittels der Führungseinrichtung 6, insbesondere der Führungsschienen 7 und/oder Führungselemente 8, geführt werden bzw. auf der Führungseinrichtung 6 rollen.

Vorzugsweise sind die Förderelemente 5 seitlich abgewinkelt bzw. abgekantet. Besonders bevorzugt weisen die Förderelemente 5 jeweils zwei Seitenkanten 5D auf, vorzugsweise wobei die Seitenkanten 5D am seitlichen Rand der Förderelemente 5 angeordnet sind und/oder von der Oberseite 5A abragen, insbesondere rechtwinklig.

Vorzugsweise bilden die Förderelemente 5 - insbesondere des Obertrums 9 - eine Förderrinne. Eine derartige Konstruktionsweise schützt die Fördervorrichtung 3 bzw. die Führungseinrichtung 6 vor etwaigen Verunreinigungen und/oder verhindert ein mögliches Verkanten des Förderguts bzw. Werkstücks 4 im Kanal 2 bzw. mit der Kanalwandung 15.

Die Förderelemente 5 weisen vorzugsweise jeweils mehrere Durchbrüche 5E, wie Bohrungen, Schlitze o. dgl., auf, vorzugsweise wobei etwaige Verunreinigungen bzw. Restgut, insbesondere vom Fördergut bzw. Werkstück 4 gelöster Werkstoff, durch die Durchbrüche 5E auf dem Kanalboden 15A fallen können bzw. kann und/oder das Fördergut bzw. Werkstück 4 mittels der Durchbrüche 5E von unten (zusätzlich) gekühlt werden kann.

Die Fördervorrichtung 3, insbesondere die Förderelemente 5, weist bzw. weisen vorzugsweise Abstreifer 5F auf. Die Abstreifer 5F sind vorzugsweise zum Abstreifen von Restgut bzw. von vom Fördergut bzw. Werkstück 4 gelösten Werkstoff ausgebildet. Insbesondere ist Restgut bzw. der vom Werkstück 4 gelöste Werkstoff mittels der Abstreifer 5F aus dem Kanal 2 förderbar bzw. kehrbar.

Die Abstreifer 5F sind vorzugsweise an bzw. mit der Unterseite 5C der Förderelemente 5 befestigt bzw. verbunden. Besonders bevorzugt sind die Abstreifer 5F zusammen mit den Förderelementen 5 durch den Kanal 2 bewegbar, insbesondere schiebbar oder ziehbar, vorzugsweise sowohl in die Förderrichtung F als auch in die Rückförderrichtung R.

Die Abstreifer 5F sind vorzugsweise jeweils als Kante bzw. Abstreifkante ausgebildet und/oder ragen zumindest im Wesentlichen orthogonal von den Förderelementen 5 bzw. der Unterseite 5C der Förderelemente 5 ab, insbesondere in Richtung Kanalboden 15A.

Besonders bevorzugt sind die Abstreifer 5F quer zur Förderrichtung F bzw. Rückförderrichtung R angeordnet.

Die Abstreifer 5F sind vorzugsweise zumindest teilweise oder endseitig flexibel, elastisch und/oder verformbar ausgebildet. Besonders bevorzugt weisen die Abstreifer 5F Kunststoffe, insbesondere Elastomere, auf und/oder sind durch diese hergestellt.

Die Abstreifer 5F sind vorzugsweise höher bzw. länger als der Abstand zwischen den Förderelementen 5 des Obertrums 9 und den Förderelementen 5 des Untertrums 10, insbesondere derart, dass die Abstreifer 5F der Förderelemente 5 im Obertrum 9 die Oberseite 5A der Förderelemente 5 im Untertrum 10 berühren bzw. auf den Förderelementen 5 im Untertrum 10 aufliegen.

Vorzugsweise sind die Abstreifer 5F höher bzw. länger als der Abstand zwischen den Förderelementen 5 im Untertrum 10 und dem Kanalboden 15A, vorzugsweise derart, dass die Abstreifer 5F der Förderelemente 5 im Untertrum 10 den Kanalboden 15A berühren und/oder auf diesen aufliegen.

Vorzugsweise sind die Abstreifer 5F der Förderelemente 5 im Obertrum 9 dazu ausgebildet, die Förderelemente 5 bzw. Oberseite 5A der Förderelemente 5 im Untertrum 10 zu reinigen bzw. abzustreifen.

Zusätzlich oder alternativ sind die Abstreifer 5F der Förderelemente 5 im Untertrum 10 dazu ausgebildet, den Kanalboden 15A zu reinigen bzw. abzustreifen. Insbesondere ist die Fördervorrichtung 3 selbstreinigend ausgebildet, vorzugsweise mittels der Abstreifer 5F. Zusätzlich ist die Fördervorrichtung 3 dazu ausgebildet, den Kanal 2 zu reinigen, vorzugsweise mittels der Abstreifer 5F.

Die Förderelemente 5 sind, wie bereits erwähnt, vorzugsweise mittels der Antriebseinrichtung 13 angetrieben oder antreibbar, insbesondere durch den Kanal 2 drückbar bzw. schiebbar und/oder ziehbar.

Besonders bevorzugt sind/ist ein, vorzugsweise das in Rückförderrichtung R letzte bzw. das an dem der Antriebseinrichtung 13 zugewandte bzw. zugeordnete Ende der Anlage 1 bzw. Fördervorrichtung 3 angeordnete, Förderelement 5 und/oder ein, vorzugsweise das in Förderrichtung F letzte bzw. das an dem der Antriebseinrichtung 13 abgewandte Ende der Anlage 1 bzw. der Fördervorrichtung 3 angeordnete, Förderelement 5 dazu ausgebildet, eine Antriebskraft, insbesondere Druck und/oder Zug, auf die anderen Förderelemente 5 im Obertrum 9 bzw. Untertrum 10 zu übertragen.

Die Antriebseinrichtung 13 ist vorzugsweise dazu ausgebildet, die Förderelemente 5 schubweise, stoßweise, schrittweise, pulsierend bzw. taktweise anzutreiben. Insbesondere sind die Förderelemente 5 bzw. ist das Fördergut bzw. Werkstück 4 mittels der Förderelemente 5 schubweise, schrittweise, stoßweise, pulsierend und/oder taktweise durch den Kanal 2 bzw. mittels der Fördervorrichtung 3 förderbar bzw. transportierbar.

Die Antriebseinrichtung 13 ist vorzugsweise als motorischer, elektrischer, hydraulischer und/oder pneumatischer Antrieb ausgebildet.

Besonders bevorzugt weist die Antriebseinrichtung 13 einen Antrieb 13A, wie einen Arbeitszylinder, insbesondere einen Hydraulikzylinder, sowie ein Übertragungselement 13B, wie eine Kolbenstange, auf, vorzugsweise wobei das Übertragungselement 13B - zumindest temporär - mit den Förderelementen 5 bzw. einem Förderelement 5 in Verbindung steht bzw. die Förderelemente 5 antreibt, insbesondere anschiebt, vorzugsweise im Arbeitstakt des Antriebs 13A bzw. Arbeitszylinders.

Vorzugsweise sind sowohl der Obertrum 9 bzw. die Förderelemente 5 im Obertrum 9 als auch der Untertrum 10 bzw. die Förderelemente 5 im Untertrum 10 mittels der Antriebseinrichtung 13 antreibbar. Besonders bevorzugt sind sowohl die Förderelemente 5 im Obertrum 9 als auch die Förderelemente 5 im Untertrum 10 durch den Kanal 2 mittels der Antriebseinrichtung 13 schiebbar bzw. ziehbar.

Bei der dargestellten Ausführungsform weist die Antriebseinrichtung 13 zwei Übertragungselemente 13B auf, vorzugsweise wobei ein Übertragungselement 13B dazu ausgebildet ist, den Obertrum 9 bzw. die Förderelemente 5 im Obertrum 9 anzutreiben, insbesondere zu schieben oder zu ziehen, und das andere Übertragungselement 13B dazu ausgebildet ist, den Untertrum 10 bzw. die Förderelemente 5 im Untertrum 10 anzutreiben, insbesondere zu schieben oder zu ziehen. Bei einer derartigen Ausführungsform sind die Übertragungselemente 13B vorzugsweise vertikal zueinander versetzt bzw. ein Übertragungselement 13B auf der Höhe des Obertrums 9 und das andere Übertragungselement 13B auf der Höhe des Untertrum 10 angeordnet.

Vorzugsweise ist die Antriebseinrichtung 13 dazu ausgebildet ist, die Förderelemente 5 im Obertrum 9 durch den Kanal 2 zu schieben und die Förderelemente 5 im Untertrum 10 durch den Kanal 2 zu ziehen oder umgekehrt. Bei einer derartigen Ausführungsform sind die Förderelemente 5 - zumindest temporär - formschlüssig miteinander verbunden, insbesondere miteinander verhakt, vorzugsweise derart, dass diese durch den Kanal 2 geschoben und gezogen werden können.

Bei einer alternativen Ausführungsform (nicht dargestellt) weist die Anlage 1 bzw. die Fördervorrichtung 3 eine Übertragungseinrichtung auf, vorzugsweise wobei die Übertragungseinrichtung dazu ausgebildet ist, eine von der Antriebseinrichtung 13 erzeugte Antriebskraft auf eine beliebige Seite bzw. ein beliebiges Ende der Fördervorrichtung 3 zu übertragen, vorzugsweise derart, dass die Förderelemente 5 mittels der Antriebseinrichtung 13 - direkt und indirekt mittels der Übertragungseinrichtung - von beiden Seiten bzw. beiden Enden der Fördervorrichtung 3 antreibbar bzw. anschiebbar sind. Insbesondere kann die Übertragungseinrichtung als Schubstange ausgebildet, vorzugsweise wobei die Schubstange sich entlang des Kanals 2 erstreckt.

Die Antriebseinrichtung 13 ist vorzugsweise an einer Seite bzw. einem axialen Ende des Kanals 2 bzw. der Fördervorrichtung 3 angeordnet. Besonders bevorzugt ist die Antriebseinrichtung 13 außerhalb des Kanals 2 angeordnet. Hier sind jedoch auch andere Lösungen möglich, insbesondere bei denen die Antriebseinrichtung 13 - zumindest teilweise - in den Kanal 2 hineinragt bzw. im Kanal 2 angeordnet ist.

Es sind insbesondere auch konstruktive Lösungen möglich, bei denen die Anlage 1 bzw. die Fördervorrichtung 3 mehrere, insbesondere zwei, Antriebseinrichtungen 13 aufweist, vorzugsweise wobei jeweils eine Antriebseinrichtung 13 auf einer Seite bzw. an einem Ende der Anlage 1, des Kanals 2 bzw. der Fördervorrichtung 3 angeordnet ist.

Bei der dargestellten Ausführungsform sind die Antriebseinrichtung 13 und die Hub-Senk-Einrichtung 14 als separate Antriebe bzw. Einrichtungen ausgebildet. Es sind jedoch insbesondere auch konstruktive Lösungen möglich, bei denen die Antriebseinrichtung 13 und die Hub-Senk-Einrichtung 14 einen gemeinsamen Antrieb aufweisen bzw. die Antriebseinrichtung 13 die Hub-Senk-Einrichtung 14 aufweist oder bildet bzw. antreibt.

Die Hub-Senk-Einrichtung 14 ist vorzugsweise dazu ausgebildet, die Fördervorrichtung 3, insbesondere die Führungseinrichtung 6 bzw. die Führungselemente 8, zumindest endseitig abzusenken bzw. anzuheben und/oder zu kippen bzw. zu neigen. Insbesondere ist die Hub-Senk-Einrichtung 14 dazu ausgebildet, die Förderelemente 5 vom Obertrum 9 zum Untertrum 10 und/oder vom Untertrum 10 zum Obertrum 9 zu transportieren.

Die Hub-Senk-Einrichtung 14 ist besonders bevorzugt als hydraulischer, pneumatischer, elektrischer und/oder motorischer Antrieb ausgebildet.

Vorzugsweise weist die Anlage 1 bzw. die Fördervorrichtung 3 zwei Hub-Senk-Einrichtungen 14 auf, vorzugsweise wobei die Hub-Senk-Einrichtungen 14 jeweils an einem (axialen) Ende bzw. einer Seite des Kanals 2 bzw. der Fördervorrichtung 3 angeordnet sind.

Es ist jedoch auch möglich, dass die Anlage 1 bzw. die Fördervorrichtung 3 lediglich eine Hub-Senk-Einrichtung 14 aufweist, vorzugsweise wobei die Hub-Senk-Einrichtung 14 dazu ausgebildet ist, die Förderelemente 5 bzw. die Führungselemente 8 sowohl vom Untertrum 10 zum Obertrum 9 anzuheben als auch vom Obertrum 9 zum Untertrum 10 abzusenken bzw. den Wechsel der Förderelemente 5 vom Obertrum 9 zum Untertrum 10 bzw. umgekehrt an beiden Seiten bzw. axialen Enden der Anlage 1 bzw. der Fördervorrichtung 3 zu ermöglichen.

Darüber hinaus sind konstruktive Lösungen möglich, bei denen lediglich eine Seite bzw. ein axiales Ende der Anlage 1 bzw. der Fördervorrichtung 3 die Hub-Senk-Einrichtung 14 aufweist und/oder lediglich die Förderelemente 5 bzw. Führungselemente 8 auf einer Seite bzw. einem axialen Ende der Anlage 1 bzw. der Fördervorrichtung 3 mittels der Hub-Senk-Einrichtung 14 angehoben werden. Vorzugsweise ist bei einer derartigen Ausführungsform die Hub-Senk-Einrichtung 14 dazu ausgebildet ist, ein Förderelement 5 vom Untertrum 10 zum Obertrum 9 anzuheben. In diesem Fall ist vorgesehen, dass der Wechsel eines Förderelements 5 vom Obertrum 9 zum Untertrum 10 selbsttätig, insbesondere durch die Gewichtskraft des entsprechendes Förderelements 5, erfolgt.

Beispielsweise können die oder zwei der Führungselemente 8 zum Wechsel des Förderelements 5 vom Obertrum 9 zum Untertrum 10 geneigt bzw. gekippt und/oder als Schräge ausgebildet sein, vorzugsweise derart, dass die Förderelemente 5 selbsttätig vom Obertrum 9 zum Untertrum 10 wechseln, insbesondere rutschen.

Auch sind konstruktive Lösungen möglich, bei denen die oder zwei der Führungselemente 8 zum Wechsel eines Förderelements 5 vom Obertrum 9 zum Untertrum 10 unter der Gewichtskraft des entsprechenden Förderelements 5 absenkbar sind. Bei einer derartigen Ausführungsform ist es vorzugsweise vorgesehen, dass die entsprechenden Führungselemente 8 mittels einer Feder bzw. einer Federkraft vorgespannt und unter der bzw. durch die Gewichtskraft des Förderelements 5 absenkbar sind.

Vorzugsweise weist die Hub-Senk-Einrichtung 14 einen Antrieb 14A und/oder ein oder mehrere Übertragungselemente 14B auf, mittels derer das Führungselement 8 bzw. die Führungselemente 8 und/oder das Förderelement 5 anhebbar bzw. absenkbar ist bzw. sind.

Die Hub-Senk-Einrichtung 14, insbesondere das Übertragungselement 14B, ist vorzugsweise form-, kraft- und/oder stoffschlüssig mit dem Führungselement 8 bzw. den Führungselementen 8 verbunden oder verbindbar.

Die Übertragungselemente 14B der Hub-Senk-Einrichtung 14 sind vorzugsweise unabhängig voneinander steuerbar, insbesondere anhebbar oder absenkbar. Auf diese Weise ist es möglich, - zusätzlich zu einer Hub-Senk-Bewegung - eine Kippbewegung mittels der Hub-Senk-Einrichtung 14 zu erzeugen.

Bei der dargestellten Ausführungsform sind die Förderelemente 5 bzw. die Führungselemente 8 mittels der Hub-Senk-Einrichtung 14 auch in axialer Richtung bzw. Förderrichtung F und/oder Rückförderrichtung R bewegbar, insbesondere verschiebbar.

Besonders bevorzugt ist die Hub-Senk-Einrichtung 14 dazu ausgebildet, die Förderelemente 5 bzw. die Führungselemente 8 in die durch Pfeile dargestellte Hubrichtung H, Senkrichtung S, Förderrichtung F und/oder Rückförderrichtung R zu bewegen.

Insbesondere sind die Förderelemente 5 bzw. die Führungselemente 8 mittels der Hub-Senk-Einrichtung 14 in einer Schwenk- bzw. Kreisbewegung bewegbar, vorzugsweise derart, dass die Förderelemente 5 formschlüssig miteinander verbindbar, insbesondere ineinander verhakbar, und/oder formschlüssig miteinander verbundene Förderelemente 5 voneinander trennbar, insbesondere enthakbar, sind.

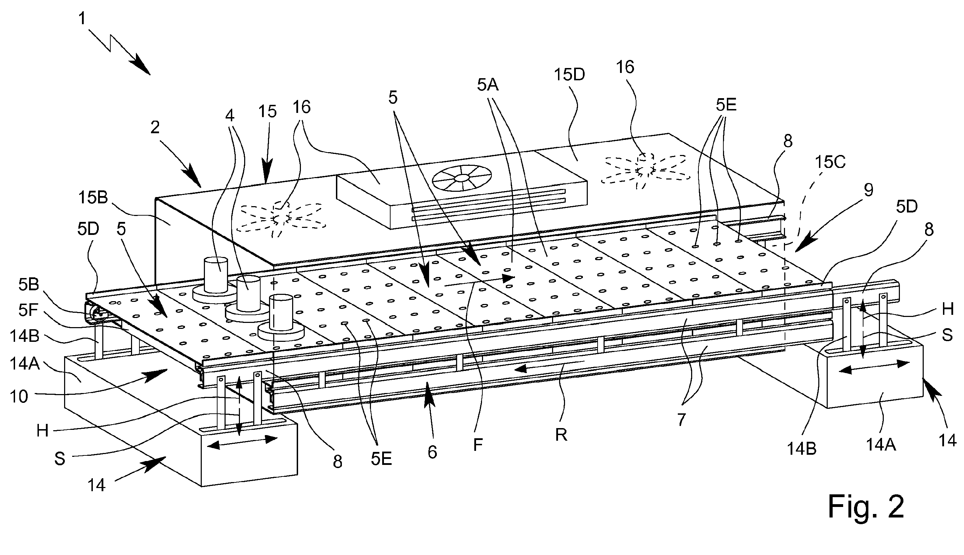

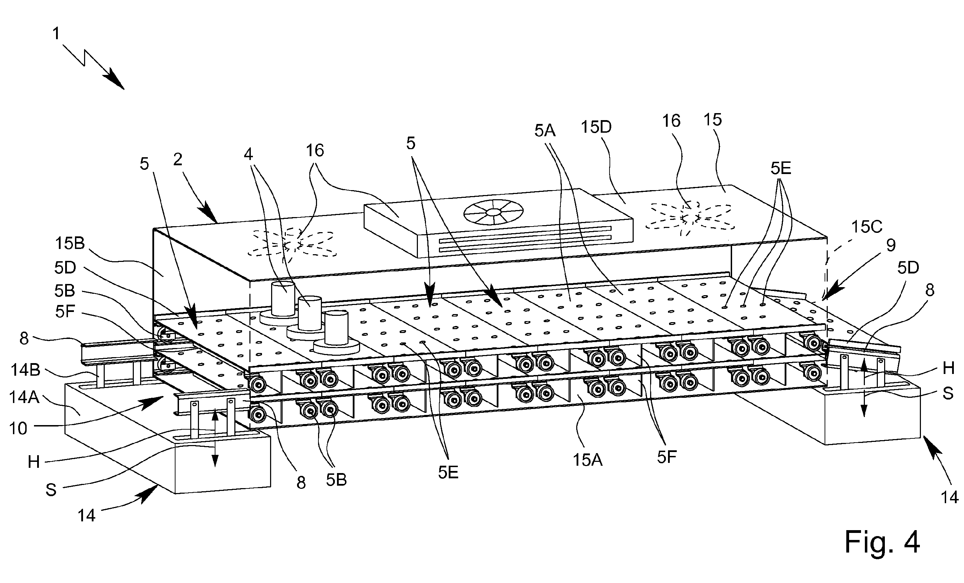

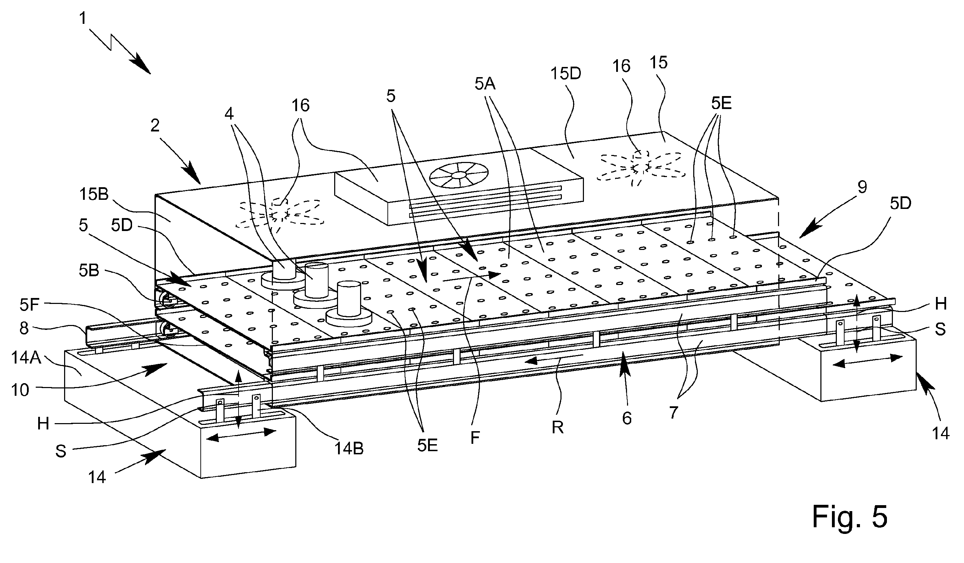

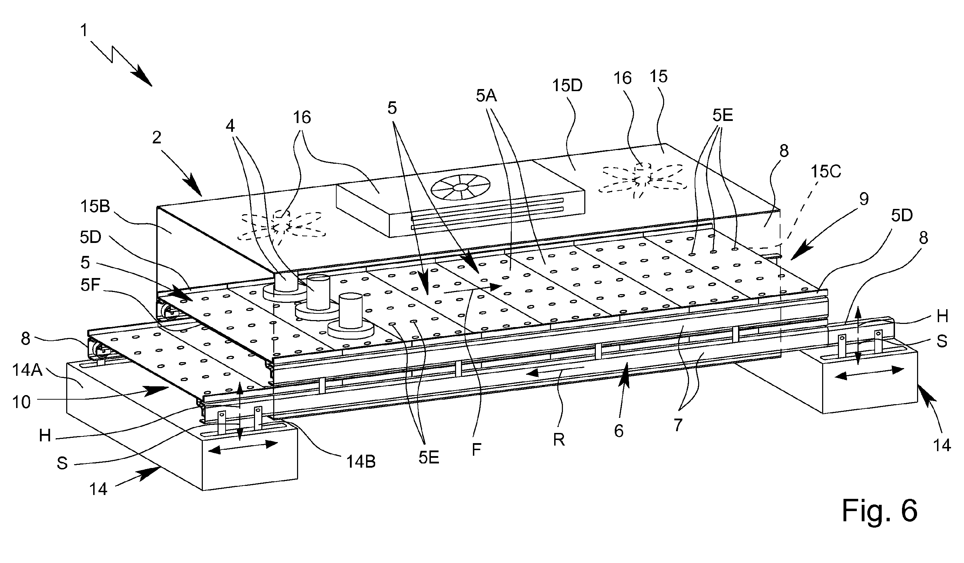

Im Folgenden wird das vorschlagsgemäße Verfahren zur Nachbehandlung, insbesondere Kühlen, des Förderguts bzw. Werkstücks 4 anhand von Fig. 2 bis Fig. 6 näher erläutert.

Das vorschlagsgemäße Verfahren bzw. einzelne Verfahrensschritte wird bzw. werden vorzugsweise mittels der Anlage 1 bzw. der Fördervorrichtung 3 durchgeführt.

Vorzugsweise wird das Fördergut bzw. Werkstück 4, insbesondere ein Gussstück, auf die Fördervorrichtung 3, insbesondere die Förderelemente 5 bzw. die durch die Förderelemente 5 gebildete Förderfläche, platziert, gelegt und/oder geschoben.

Besonders bevorzugt wird die Fördervorrichtung 3 automatisiert, beispielsweise mittels einer Aufgabeeinrichtung (nicht dargestellt), Manipulators o. dgl., beschickt bzw. mit dem Fördergut bzw. Werkstück 4 beladen.

Vorzugsweise wird die Anlage 1 bzw. die Fördervorrichtung 3 an dem ersten axialen Ende bzw. der ersten Seite der Anlage 1 bzw. der Fördervorrichtung 3 beladen bzw. geschickt, insbesondere an der Aufgabestelle 11. Es ist jedoch auch möglich, die Anlage 1 bzw. die Fördervorrichtung 3 an einer beliebigen Stelle zu beladen bzw. zu beschicken.

Vorzugsweise wird das Fördergut bzw. Werkstück 4 zumindest im Wesentlichen lose auf die Fördervorrichtung 3, insbesondere die Förderelemente 5 bzw. die durch die Förderelemente 5 gebildete Förderfläche, gelegt. Es ist jedoch auch möglich, dass das Fördergut bzw. das Werkstück 4 form- und/oder kraftschlüssig mit der Fördervorrichtung 3, insbesondere den Förderelementen 5 bzw. der durch die Förderelemente 5 gebildeten Förderfläche, verbunden wird. Besonders bevorzugt wird das Fördergut bzw. das Werkstück 4 von der Fördervorrichtung 3 bzw. den Förderelementen 5 aufgenommen und/oder gehalten.

Vorzugsweise werden mehrere Werkstücke 4 in Förderrichtung F nebeneinander und/oder hintereinander auf die Fördervorrichtung 3 bzw. die Förderelemente 5 gesetzt, wie schematisch dargestellt.

Besonders bevorzugt wird ein Werkstück 4 oder werden mehrere Werkstücke 4 auf ein Förderelement 5 gesetzt. Es ist jedoch auch möglich, dass mehrere Förderelemente 5 ein Werkstück 4 aufnehmen bzw. ein Werkstück 4 von mehreren Förderelementen 5 aufgenommen wird.

Das Fördergut bzw. Werkstück 4 wird vorzugsweise mittels der Fördervorrichtung 3 durch den Kanal 2 gefördert, insbesondere zur Nachbehandlung des Förderguts bzw. des Werkstücks 4.

Vorzugsweise wird das Fördergut bzw. Werkstück 4 schubweise, schrittweise, taktweise, pulsierend und/oder stoßweise, insbesondere im Arbeitstakt der Antriebseinrichtung 13, durch den Kanal 2 gefördert, vorzugsweise in die Förderrichtung F bzw. von der Aufgabestelle 11 zur Abgabestelle 12.

Vorzugsweise wird das Fördergut bzw. Werkstück 4 im Kanal 2 gekühlt bzw. Wärme des Förderguts bzw. Werkstücks 4 im Kanal 2 abgeführt, insbesondere durch (erzwungene) Konvektion. Es ist jedoch auch möglich, dass das Fördergut bzw. Werkstück 4 anderweitig im Kanal 2 nachbehandelt wird, wie eingangs bereits beschrieben. Insbesondere kann das Fördergut bzw. Werkstück 4 im Kanal 2 wärmebehandelt, beschichtet, gereinigt und/oder oberflächenbehandelt werden.

Vorzugsweise wird im Kanal 2 ein Luftstrom, insbesondere ein Kühlluftstrom, erzeugt, vorzugsweise mittels der Belüftungseinrichtung 16. Besonders bevorzugt ist der Luftstrom der Förderrichtung F zumindest im Wesentlichen entgegengerichtet und/oder zumindest im Wesentlichen turbulent oder laminar ausgebildet.

Vorzugsweise wird bzw. werden der Obertrum 9 bzw. die Förderelemente 5 im Obertrum 9 von der Antriebseinrichtung 13 bzw. dem Übertragungselement 13B angetrieben bzw. angeschoben, besonders bevorzugt direkt bzw. unmittelbar, insbesondere zugmittelfrei.

Vorzugsweise wird das der Antriebseinrichtung 13 zugewandte bzw. äußerste bzw. in Förderrichtung F erste Förderelement 5 bzw. das Förderelement 5 am ersten axialen Ende der Fördervorrichtung 3 mittels der Antriebseinrichtung 13 bzw. dem Übertragungselement 13B angetrieben bzw. angeschoben, vorzugsweise in Förderrichtung F. Vorzugsweise überträgt das angetriebene bzw. angeschobene Förderelement 5 eine von der Antriebseinrichtung 13 erzeugte Antriebskraft auf die anderen Förderelemente 5 im Obertrum 9.

Es ist jedoch auch möglich, dass die Antriebseinrichtung 13 ein anderes, beispielsweise ein mittiges, Förderelement 5 im Obertrum 9 antreibt, vorzugsweise wobei die Förderelemente 5 im Obertrum 9 formschlüssig miteinander verbunden sind, beispielsweise durch Verhaken.

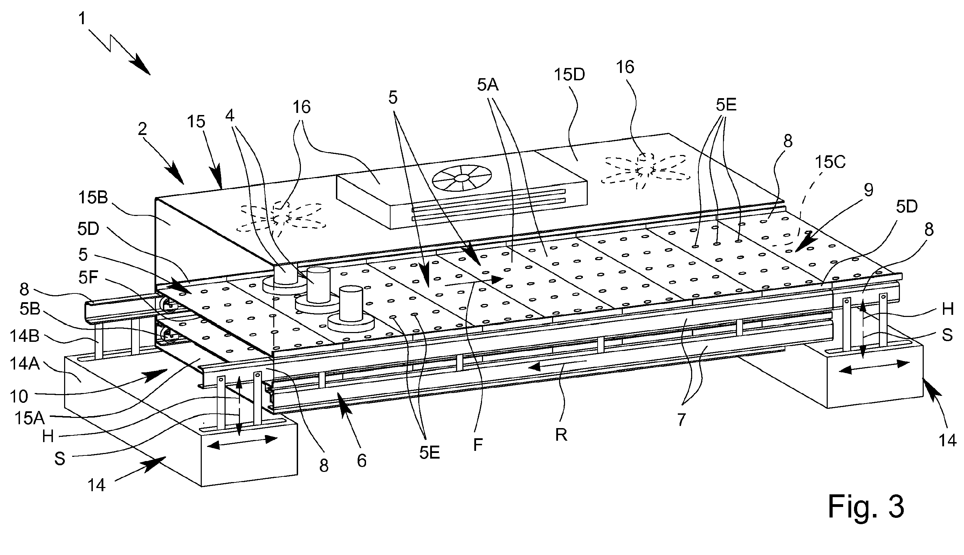

Die bzw. alle Führungselemente 8 befinden sich beim Antrieb des Obertrums 9 vorzugsweise in der angehobenen/oberen Position und/oder bilden beim Antrieb des Obertrums 9 eine Verlängerung der oberen Führungsschienen 7 bzw. der oberen Führungsbahn, vorzugsweise so dass das der Antriebseinrichtung 13 zugewandte bzw. angehobene bzw. in Förderrichtung F erste Förderelement 5 im Obertrum 9 von den Führungselementen 8 am ersten Ende der Fördervorrichtung 3 auf die Führungsschienen 7 und/oder das äußerste, am zweiten Ende der Fördervorrichtung 3 angeordnete bzw. in Förderrichtung F letzte Förderelement 5 im Obertrum 9 von den Führungsschienen 7 auf die Führungselemente 8 am zweiten Ende der Fördervorrichtung 3 geschoben oder gezogen werden kann, wie schematisch in Fig. 2 und Fig. 3 dargestellt.

Vorzugsweise werden die Förderelemente 5 zumindest seitlich von der Führungseinrichtung 6, insbesondere den Führungsschienen 7, geführt. Besonders bevorzugt werden die Laufräder 5B der Förderelemente 5 in der Führungseinrichtung 6, insbesondere den Führungsschienen 7, geführt.

Vorzugsweise fällt vom Fördergut bzw. Werkstück 4 gelöster Werkstoff, insbesondere Formstoff, beim Transport des Förderguts bzw. Werkstücks 4 durch die Durchbrüche 5E der Förderelemente 5 auf den Kanalboden 15A. Besonders bevorzugt wird der vom Fördergut bzw. Werkstück 4 gelöste Werkstoff aus dem Kanal 2 mittels der Förderelemente 5, insbesondere der Abstreifer 5F, gefördert bzw. gekehrt, vorzugsweise in die Rückförderrichtung R.

Die Abstreifer 5F werden vorzugsweise zusammen mit den Förderelementen 5 durch den Kanal 2 bewegt bzw. geschoben. Vorzugsweise werden die Abstreifer 5F im Obertrum 9 in Förderrichtung F bzw. entgegen der Rückförderrichtung R bewegt und/oder streifen die Abstreifer 5F im Obertrum 9 die Förderelemente 5 im Untertrum 10 bzw. die Oberseite 5A der Förderelemente 5 im Untertrum 10 ab.

Vorzugsweise fällt der vom Fördergut bzw. Werkstück 4 gelöste Werkstoff durch die Durchbrüche 5E der Förderelemente 5 im Obertrum 9 auf die Förderelemente 5, insbesondere die Oberseite 5A der Förderelemente 5, im Untertrum 10.

Vorzugsweise wird der vom Fördergut bzw. Werkstück 4 gelöste Werkstoff von der Oberseite 5A der Förderelemente 5 im Untertrum 10 mittels der Abstreifer 5F der Förderelemente 5 im Obertrum 9 derart abgestriffen, dass dieser durch die Durchbrüche 5E der Förderelemente 5 im Untertrum 10 auf den Kanalboden 15A fällt bzw. rieselt.

Vorzugsweise wird anschließend der vom Werkstück 4 bzw. Fördergut gelöste Werkstoff mittels der Abstreifer 5F der Förderelemente 5 im Untertrum 10 aus dem Kanal 2 bzw. vom Kanalboden 15A gekehrt, insbesondere in Rückförderrichtung R.

Auf diese Weise wird der Kanal 2 mittels der Fördervorrichtung 3, insbesondere der Förderelemente 5 bzw. Abstreifer 5F, gereinigt.

Vorzugsweise wird das Fördergut bzw. das Werkstück 4 im Kanal 2 von unten bzw. mittels der Durchbrüche 5E belüftet. Insbesondere ermöglichen die Durchbrüche 5E zusätzlich auch eine verbesserte Kühlung des Förderguts bzw. Werkstücks 4.

Vorzugsweise wird das Fördergut bzw. Werkstück 4 am zweiten Ende der Anlage 1 bzw. des Kanals 2 bzw. der Fördervorrichtung 3, insbesondere an der Abgabestelle 12, abgegeben und/oder abgeworfen, vorzugsweise selbsttätig.

Vorzugsweise wird bzw. werden - insbesondere schubweise, taktweise, pulsierend bzw. gemäß dem Antrieb 13A bzw. des Arbeitstakts der Antriebseinrichtung 13 - ein oder mehrere Förderelemente 5 auf oder in das Führungselement 8 am zweiten (axialen) Ende der Anlage 1, Kanals 2 bzw. Fördervorrichtung 3 gedrückt bzw. geschoben oder gezogen, vorzugsweise zur Abgabe bzw. zum Abwurf des Förderguts bzw. Werkstücks 4 und/oder zum Wechsel des entsprechenden Förderelements 5 bzw. der entsprechenden Förderelemente 5 vom Obertrum 9 zum Untertrum 10.

Vorzugsweise werden die - insbesondere mit dem Förderelement 5 beladenen bzw. am zweiten Ende der Fördervorrichtung 3 angeordneten - Führungselemente 8, insbesondere mittels der Heb-Senk-Einrichtung 14, abgesenkt, insbesondere vom Obertrum 9 zum Untertrum 10, wie insbesondere Fig. 3 veranschaulicht.

Zusätzlich oder alternativ werden die - insbesondere mit dem Förderelement 5 beladenen bzw. am zweiten Ende der Fördervorrichtung 3 angeordneten - Führungselemente 8, insbesondere mittels der Hub-Senk-Einrichtung 14, geneigt bzw. gekippt, vorzugsweise um das Fördergut bzw. Werkstück 4 abzugeben, insbesondere selbsttätig, beispielsweise durch Rutschen.

Es sind insbesondere auch Verfahrensvarianten möglich, bei denen die Förderelemente 5 zum Wechsel vom Obertrum 9 zum Untertrum 10 und/oder zur Abgabe des Förderguts bzw. Werkstücks 4 - vorzugsweise am zweiten Ende der Anlage 1 bzw. der Fördervorrichtung 3 bzw. an der Abgabestelle 12 - vom Obertrum 9 zum Untertrum 10 bzw. von der oberen Führungsbahn auf die untere Führungsbahn herunterfallen oder herunterrutschen, vorzugsweise durch bzw. auf einer durch die Führungselemente 8 gebildeten Schräge.

Bei einer besonders bevorzugt Verfahrensvariante werden die Förderelemente 5 bzw. Führungselemente 8 zusammen mit den Förderelementen 5 in einer zumindest im Wesentlichen horizontalen Ausrichtung, insbesondere mittels der Hub-Senk-Einrichtung 14, abgesenkt. Auf diese Weise wird eine besonders schonende Handhabung der Förderelemente 5 ermöglicht oder unterstützt und somit die Lebensdauer der Förderelemente 5 verlängert.

Optional wird das Förderelement 5 bzw. Führungselement 8 zusammen mit dem Förderelement 5 in einer Schwenk- bzw. Kreisbewegung vom Obertrum 9 zum Untertrum 10 abgesenkt, vorzugsweise um das Förderelement 5 von den Förderelementen 5 im Obertrum 9 zu trennen und/oder mit den Förderelementen 5 im Untertrum 10 zu verbinden, insbesondere formschlüssig, vorzugsweise durch Verhaken.

Vorzugsweise werden die bzw. alle Führungselemente 8 zumindest im Wesentlichen zeitgleich abgesenkt bzw. von der oberen/angehobenen Position in die untere/abgesenkte Position gebracht, insbesondere derart, dass die Führungselemente 8 anschließend eine Verlängerung der unteren Führungsschienen 7 bzw. der unteren Führungsbahn bilden und/oder dass das abgesenkte bzw. am zweiten Ende der Fördervorrichtung 3 angeordnete bzw. in Rückförderrichtung R erste Förderelement 5 im Untertrum 10 von den Führungselementen 8 auf die Führungsschienen 7 und/oder das äußerste bzw. der Antriebseinrichtung 13 zugewandte bzw. in Rückförderrichtung R letzte Förderelement 5 von den Führungsschienen 7 auf die Führungselemente 8 geschoben oder gezogen werden können/kann.

Vorzugsweise erfolgt ein Wechsel eines Förderelements 5 oder mehrerer Förderelemente 5 vom Obertrum 9 zum Untertrum 10 bzw. vom Untertrum 10 zum Obertrum 9 beim Pausieren der Förderbewegung bzw. der Antriebseinrichtung 13 bzw. zwischen zwei Schüben mittels der Antriebseinrichtung 13 bzw. zwischen zwei Arbeitstakten der Antriebseinrichtung 13.

Besonders bevorzugt wird ein Förderelement 5 bzw. werden die Führungselemente 8 dann abgesenkt bzw. angehoben, wenn das Übertragungselement 13B der Antriebseinrichtung 13 zumindest um die Länge eines Förderelements 5 bzw. Führungselements 8 vom zuletzt angetriebenen Förderelement 5 bzw. dem axialen Ende der Führungsschienen 7 - entgegen der Förderrichtung F bzw. Rückförderrichtung R - zurückbewegt wurde bzw. beabstandet ist und/oder zwischen der Antriebseinrichtung 13, insbesondere dem axialen Ende des Übertragungselements 13, und dem zuletzt angetriebenen Förderelement 5 bzw. dem axialen Ende der Führungsschienen 7 mindestens ein Abstand vorliegt, der der Länge eines Förderelements 5 bzw. der Führungselemente 8 zumindest im Wesentlichen entspricht.

Vorzugsweise werden die Förderelemente 5 im Untertrum 10, insbesondere zusammen mit dem abgesenkten Förderelement 5, durch den Kanal 2 bzw. in Rückförderrichtung R bzw. von der Abgabestelle 12 zur Aufgabestelle 11 gedrückt bzw. geschoben oder gezogen, vorzugsweise mittels der oder einer weiteren, insbesondere an dem zweiten Ende der Fördervorrichtung 3 angeordneten, Antriebseinrichtung 13.

Vorzugsweise wird sowohl der Obertrum 9 als auch der Untertrum 10 von der bzw. einer einzigen bzw. einer auf einer Seite bzw. einem (axialen) Ende der Anlage 1 bzw. der Fördervorrichtung 3 angeordneten Antriebseinrichtung 13 angetrieben.

Insbesondere werden sowohl die Förderelemente 5 im Obertrum 9 als auch die Förderelemente 5 im Untertrum 10 mittels der bzw. einer einzigen Antriebseinrichtung 13 angetrieben, insbesondere durch den Kanal 2 geschoben oder gezogen.

Vorzugsweise wird anschließend das in Förderrichtung F erste bzw. in Rückförderrichtung R letzte Förderelement 5 im Untertrum 10 auf oder in das Führungselement 8 gedrückt bzw. gezogen, vorzugsweise zum Wechsel des entsprechenden Förderelements 5 vom Untertrum 10 zum Obertrum 9.

Bei einer alternativen Ausführungsform bzw. Verfahrensvariante (nicht dargestellt) werden die Förderelemente 5 im Untertrum 10 mittels einer weiteren Antriebseinrichtung 13 durch den Kanal 2 gedrückt bzw. geschoben, vorzugsweise schubweise, taktweise, schrittweise, stoßweise bzw. pulsierend, insbesondere wobei die weitere Antriebseinrichtung 13 am zweiten Ende der Anlage 1 bzw. Fördervorrichtung 3 angeordnet ist.

Vorzugsweise wird - insbesondere nach Beendigung der Antriebsbewegung bzw. des Arbeitstaktes der Antriebseinrichtung 13 - das in Rückförderrichtung R letzte Förderelement 5 von den anderen Förderelementen 5 im Untertrum 10 getrennt, insbesondere entkoppelt. Insbesondere wird das Förderelement 5 zum Wechsel vom Untertrum 10 zum Obertrum 9 angehoben, besonders bevorzugt mittels der Hub-Senk-Einrichtung 14, insbesondere in Hubrichtung H.

Optional wird das Förderelement 5 bzw. werden die Führungselemente 8 zusammen mit dem Förderelement 5 in einer Schwenk- bzw. Kreisbewegung vom Untertrum 10 zum Obertrum 9 angehoben, vorzugsweise um das Förderelement 5 von den Förderelementen 5 im Untertrum 10 zu trennen und/oder mit den Förderelementen 5 im Obertrum 9 zu verbinden, insbesondere formschlüssig, vorzugsweise durch Verhaken.

Vorzugsweise werden die Führungselemente 8 zusammen mit dem Förderelement 5 in Hubrichtung H vom Untertrum 10 zum Obertrum 9 bewegt, vorzugsweise derart, dass das auf diese Weise angehobene Förderelement 5 wieder beschickt bzw. mit Fördergut bzw. dem Werkstück 4 beladen und/oder zusammen mit den Förderelementen 5 im Obertrum 9 mittels der Antriebseinrichtung 13 angetrieben, insbesondere angeschoben, werden kann.

Einzelne Aspekte und Merkmale der vorschlagsgemäßen Erfindung, insbesondere der Ausführungsformen bzw. Verfahrensvarianten, können unabhängig voneinander, aber auch in beliebiger Kombination bzw. Reihenfolge realisiert werden.

### Bezugszeichenliste:

- 1: Anlage
- 2: Kanal
- 3: Fördervorrichtung
- 4: Werkstück
- 5: Förderelement
- 5A: Oberseite
- 5B: Laufräder
- 5C: Unterseite
- 5D: Seitenkante
- 5E: Durchbrüche
- 5F: Abstreifer
- 6: Führungseinrichtung
- 7: Führungsschiene
- 8: Führungselement
- 9: Obertrum
- 10: Untertrum
- 11: Aufgabestelle
- 12: Abgabestelle
- 13: Antriebseinrichtung
- 13A: Antrieb
- 13B: Übertragungselement
- 14: Hub-Senk-Einrichtung
- 14A: Antrieb
- 14B: Übertragungselement
- 15: Kanalwandung
- 15A: Kanalboden
- 15B: erste Kanalseite
- 15C: zweite Kanalseite
- 15D: Kanaldecke
- 16: Belüftungseinrichtung

- F: Förderrichtung
- H: Hubrichtung
- R: Rückförderrichtung
- S: Senkrichtung

## Patentansprüche

1. Fördervorrichtung (3) zum Fördern eines Förderguts, insbesondere eines Werkstücks (4), mit mehreren voneinander trennbaren, vorzugsweise plattenartigen, Förderelementen (5) und einer Führungseinrichtung (6), insbesondere einem Schienensystem (11), zum Führen bzw. Tragen der Förderelemente (5), wobei die Führungseinrichtung (6) einen Obertrum (9) zur Zuförderung der Förderelemente (5) und einen Untertrum (10) zur Rückförderung der Förderelemente (5) aufweist,
**dadurch gekennzeichnet,**
**dass** die Führungseinrichtung (6) zum Wechsel eines Förderelements (5) vom Obertrum (9) zum Untertrum (10) bzw. vom Untertrum (10) zum Obertrum (9) endseitig absenkbar bzw. anhebbar ist, und/oder
**dass** die Fördervorrichtung (3) eine Antriebseinrichtung (13) aufweist, die die Förderelemente (5) sowohl im Obertrum (9) als auch im Untertrum (10) antreibt, und/oder
**dass** einige oder alle Förderelemente (5) jeweils einen Abstreifer (5F) zum Abstreifen von vom Fördergut gelöstem Restgut, insbesondere Werkstoff, aufweisen.

2. Fördervorrichtung nach Anspruch 1, **dadurch gekennzeichnet, dass** die Führungseinrichtung (6) endseitig ein absenkbares bzw. anhebbares Führungselement (8) aufweist, um ein Förderelement (5) dem Untertrum (10) bzw. dem Obertrum (9) zuzuführen.

3. Fördervorrichtung nach Anspruch 1 oder 2, **dadurch gekennzeichnet, dass** die Antriebseinrichtung (13) die Förderelemente (5) - vorzugsweise direkt bzw. unmittelbar und/oder schubweise - antreibt, vorzugsweise anschiebt, und/oder dass die Antriebseinrichtung (13) an einem Ende der Fördervorrichtung (3) angeordnet ist.

4. Fördervorrichtung nach einem der voranstehenden Ansprüche, **dadurch gekennzeichnet, dass** die Fördervorrichtung (3) eine Hub-Senk-Einrichtung (14) aufweist, wobei die Hub-Senk-Einrichtung (14) dazu ausgebildet ist, die Führungseinrichtung (6), insbesondere ein Führungselement (8) der Führungseinrichtung (6), anzuheben oder abzusenken.

5. Fördervorrichtung nach 4, **dadurch gekennzeichnet, dass** die Antriebseinrichtung (13) die Hub-Senk-Einrichtung (14) aufweist oder bildet und/oder die Hub-Senk-Einrichtung (14) mittels der Antriebseinrichtung (13) antreibbar ist.

6. Fördervorrichtung nach einem der voranstehenden Ansprüche, **dadurch gekennzeichnet, dass** die Förderelemente (5) jeweils mehrere Laufräder (5B) aufweisen, vorzugsweise wobei die Laufräder (5B) in der Führungseinrichtung (6) geführt sind.

7. Fördervorrichtung nach einem der voranstehenden Ansprüche, **dadurch gekennzeichnet, dass** einige oder alle Förderelemente (5) jeweils auf einer Unterseite (5C) den Abstreifer (5F) zum Abstreifen von Restgut und/oder jeweils mehrere Durchbrüche (5E) aufweisen.

8. Anlage (1) zur Nachbehandlung, insbesondere Kühlen, eines Werkstücks (4), insbesondere eines Gussstücks, mit einem Kanal (2) und einer Fördervorrichtung (3) zum Fördern des Werkstückes (4), wobei die Fördervorrichtung (3) zumindest teilweise im Kanal (2) angeordnet ist,
**dadurch gekennzeichnet,**
**dass** die Fördervorrichtung (3) nach einem der Ansprüche 1 bis 7 ausgebildet ist und/oder
**dass** vom Werkstück (4) gelöste Werkstoff vom Kanalboden (15A) des Kanals (2) mittels der Fördervorrichtung (3) aus dem Kanal (2) förderbar ist.

9. Anlage nach Anspruch 8, **dadurch gekennzeichnet, dass** eine Antriebseinrichtung (13) und/oder eine Hub-Senk-Einrichtung (14) der Fördervorrichtung (3) außerhalb des Kanals (2) angeordnet sind/ist und/oder in den Kanal (2) hineinragt/hineinragen.

10. Anlage nach Anspruch 8 oder 9, **dadurch gekennzeichnet, dass** eine Belüftungseinrichtung (16), wie ein Ventilator bzw. Gebläse, im oder am Kanal (2) angeordnet ist.

11. Verfahren zur Nachbehandlung, insbesondere Kühlen, eines Werkstücks (4), insbesondere eines Gussstücks,
wobei das Werkstück (4) mittels einer Fördervorrichtung (3) durch einen Kanal (2) zum Nachbehandeln des Werkstücks (4) gefördert wird,
wobei die Fördervorrichtung (3) mehrere voneinander trennbare, vorzugsweise plattenartige, Förderelemente (5) aufweist,
wobei die Förderelemente (5) in einem Obertrum (9) der Fördervorrichtung (3) einer Abgabestelle (12) und in einem Untertrum (10) der Fördervorrichtung (3) einer Aufgabestelle (11) zugeführt werden,
**dadurch gekennzeichnet,**
**dass** ein Förderelement (5) der Förderelemente (5) zum Wechsel vom Obertrum (9) zum Untertrum (10) oder umgekehrt abgesenkt bzw. angehoben wird, und/oder dass sowohl der Obertrum (9) als auch der Untertrum (10) von einer Antriebseinrichtung (13) angetrieben werden, und/oder
**dass** vom Werkstück (4) gelöster Werkstoff, insbesondere Formstoff, aus dem Kanal (2) mittels Abstreifer (5F) der Förderelemente (5) gefördert wird, und/oder dass die Fördervorrichtung (3) nach einem der Ansprüche 1 bis 7 ausgebildet ist.

12. Verfahren nach Anspruch 11, **dadurch gekennzeichnet, dass** die Förderelemente (5) in bzw. von einer Führungseinrichtung (6), insbesondere einem Schienensystem, der Fördervorrichtung (3) geführt bzw. getragen werden, vorzugsweise wobei die Führungseinrichtung (6), insbesondere ein Führungselement (8) der Führungseinrichtung (6), zum Wechsel eines Förderelements (5) vom Obertrum (9) zum Untertrum (10) oder umgekehrt abgesenkt bzw. angehoben und/oder gekippt wird.

13. Verfahren nach Anspruch 11 oder 12, **dadurch gekennzeichnet, dass** die Förderelemente (5) - vorzugsweise unmittelbar bzw. direkt und/oder schubweise - angetrieben werden und/oder durch den Kanal (2) gedrückt, insbesondere geschoben oder gezogen, werden, vorzugsweise wobei mindestens ein Förderelement (5) und/oder mindestens ein Führungselement (8) der Fördervorrichtung (3) beim Pausieren der Förderbewegung angehoben bzw. abgesenkt werden/wird.

14. Verfahren nach einem der Ansprüche 11 bis 13, **dadurch gekennzeichnet, dass** sich vom Werkstück (4) lösender Werkstoff durch Durchbrüche (5E) der Förderelemente (5) auf den Kanalboden (15A) fällt und/oder vom Kanalboden (15A) mittels der Förderelemente (5), insbesondere Abstreifer (5F) der Förderelemente (5), aus dem Kanal (2) gekehrt wird.

15. Verfahren nach einem der Ansprüche 11 bis 14, **dadurch gekennzeichnet, dass** das Werkstück (4) im Kanal (2) gekühlt und/oder im Kanal (2) ein Luftstrom erzeugt wird, vorzugsweise wobei der Luftstrom einer Förderrichtung (F) zumindest im Wesentlichen entgegengerichtet ist.
